# FASCICULE DE BREVET EUROPEEN

(11) **EP 0 677 029 B1**
(45) Date de publication et mention de la délivrance du brevet: **19.03.1997**
(21) Numéro de dépôt: 94902857.5
(22) Date de dépôt: 23.12.1993
(51) Int. Cl.: C04B 35/58, C04B 35/52

(54) **PROCEDE DE FABRICATION D'ARTICLES EN MATERIAU COMPOSITE CARBONE-CARBURE DE SILICIUM ET MATERIAU COMPOSITE CARBONE-CARBURE DE SILICIUM**
VERFAHREN ZUR HERSTELLUNG VON GEGENSTÄNDEN AUS KOHLENSTOFFSILIZIUMKARBID-VERBUNDWERKSTOFF, UND KOHLENSTOFF-SILIZIUMKARBID-VERBUNDWERKSTOFF
METHOD FOR FABRICATING ARTICLES MADE OF CARBON-SILICON CARBIDE COMPOSITE MATERIAL, AND COMPOSITE CARBON-SILICON CARBIDE MATERIAL

(30) Priorité: 30.12.1992 RU 9215952
(43) Date de publication de la demande: 18.10.1995
(73) Titulaire: AEROSPATIALE Société Nationale Industrielle, 75781 Paris Cédex 16 (FR); NIIGrafit Research Institute, Moscow, 111524 (RU)
(72) Inventeur: KOSTIKOV, Valery Ivanovich, Moscow, 117331 (RU); DEMIN, Alexander Victorovich, Moscow, 111394 (RU); KOLESNIKOV, Sergey Anatoljevich, Moscow, 111402 (RU); KONOKOTIN, Vasily Vasiljevich, Moscow, 125008 (RU); PONKRATOVA, Raisa Nikolaevna, Moscow, 105037 (RU)
(74) Mandataire: Des Termes, Monique
(86) Numéro de dépôt international: FR9301297
(87) Numéro de publication internationale: WO9415888

(56) Documents cités:
- EP-A- 0 493 148
- DE-A- 3 329 250
- FR-A- 2 635 773
- US-A- 4 397 901

## Description

### Domaine de l'invention

La présente invention se rapporte au domaine des matériaux composites structuraux pouvant fonctionner sous une contrainte thermomécanique élevée et dans des milieux oxydants, et peut être utile dans les industries chimique, du pétrole, de la métallurgie, et de l'aéronautique, pour fabriquer des articles et des éléments structuraux capables de résister à des milieux agressifs, comme les revêtements de chambres pour neutraliser les substances nuisibles pour l'environnement, les buses, les creusets, les pièces de turbines haute température, soumis à de lourdes charges mécaniques dans les conditions de fonctionnement.

### Description de l'art antérieur

Divers procédés sont connus dans la technique pour fabriquer des matériaux renforcés par des fibres de carbone et protégés contre l'oxydation pour empêcher un endommagement rapide dans les conditions de fonctionnement du matériau à base de carbone-carbone qui porte toutes les charges mécaniques. En général, on obtient une protection contre l'oxydation de ces matériaux en formant une couche de carbure de silicium réfractaire sur la surface de ceux-ci.

Un procédé est connu dans la technique pour fabriquer des articles composites, dans lequel on prépare tout d'abord une préforme à base de carbone et de matière plastique, sur la base de laquelle on forme une matrice de coke en chauffant la préforme jusqu'à 1 000 °C. Le composite obtenu est densifié deux fois par imprégnation avec du brai, celui-ci étant carbonisé.

Pour former une couche de SiC superficielle protectrice, la préforme carbonisée obtenue est traitée thermiquement dans une charge constituée de carbure de silicium et de silicium, formant ainsi une couche de SiC superficielle d'environ 400 µm d'épaisseur (JP.A.2-91270).

La protection du matériau de l'article (comme procédé séparé) sous la forme d'une couche de SiC superficielle ayant un coefficient de dilatation thermique différent de celui de la base carbone-carbone, provoque la fissuration de la couche de SiC lors du refroidissement, et, par conséquent, l'endommagement rapide du matériau dans les conditions de fonctionnement, compte tenu de la pénétration d'un oxydant jusqu'à celle-ci par les fissures.

En outre, le bas module d'élasticité de la base carbone-carbone rend impossible l'utilisation d'articles réalisés en ce matériau dans les structures nécessitant une rigidité élevée.

Un procédé est aussi connu dans la technique pour fabriquer des articles composites, dans lequel du carbone pyrolytique est déposé par dépôt chimique en phase vapeur sur une préforme fibreuse prémoulée sous la forme de mat de feutre ou de fibres continues, etc. (par exemple une plaque de 200x100x25 mm), après quoi on forme un revêtement de SiC protecteur en immergeant la préforme fibreuse dans une masse fondue de silicium (US.A.4.397.901). Dans ce cas, une partie du carbone pyrolytique se convertit en carbure de silicium sur les fibres de l'article.

Le dépôt de carbone pyrolytique directement sur les fibres, sans l'étape de formation d'une préforme à base de carbone et de matière plastique et, sur sa base, d'une matrice de coke, aboutit à une préforme ayant de mauvaises propriétés mécaniques, dans la mesure où les fibres de carbone semblent ne pas être liées avec la matrice, sont dans un état mobile et ne supportent pas les charges.

En outre, lorsqu'on utilise ce procédé, une grande quantité de silicium libre reste dans la matrice, ce qui réduit le niveau de température de fonctionnement de l'article et accroît les contraintes résiduelles dans le matériau (compte tenu de la dilatation du silicium lors du refroidissement), ce qui réduit aussi sa résistance. La siliciuration dans une masse fondue de silicium provoque non seulement des évaporations nuisibles pour l'environnement, mais nécessite aussi un équipement assez onéreux, et dans le cas d'articles de grande taille, les problèmes s'aggravent d'autant.

Un procédé aussi connu dans l'art est un procédé pour fabriquer un matériau structural, dans lequel on obtient une préforme à base de carbone et de matière plastique renforcée par des fibres de carbone, et on utilise un revêtement en carbone pyrolytique, toutefois celui-ci est appliqué directement sur les fibres avant de former la matrice. La base fibreuse obtenue est ensuite soumise à de multiples densifications avec un liant thermodurcissable modifié avec des additifs de SiC finement dispersés ou avec des composants formant du SiC. Après la carbonisation, suivie d'un traitement thermique, on obtient un matériau, dont la matrice de coke présente des inclusions de SiC séparées (FR.B.2.635.773).

Au moyen d'un procédé séparé, en traitant dans une charge contenant du silicium et du carbure de silicium avec un additif d'alumine, on forme une couche de SiC protectrice sur la surface de l'article. Ensuite, compte tenu de la fissuration de la couche de SiC lors du refroidissement, une seconde couche de SiC est déposée par dépôt chimique en phase vapeur sur la première couche de SiC superficielle pour recouvrir les fissures.

Ce procédé ne permet pas de conserver la longévité d'utilisation du matériau dans le cas où la couche protectrice superficielle est endommagée, dans la mesure où le revêtement préalable des fibres de carbone avec une couche de SiC mince ne peut pas garantir une capacité de support de charges appropriée du matériau lorsque la base carbone-carbone s'oxyde. Par conséquent, la fiabilité du revêtement protecteur superficiel est d'un intérêt particulier (le revêtement est rendu multicouche).

Malgré la présence d'inclusions de carbure de silicium dans la matrice de coke, le module d'élasticité du matériau obtenu par ce procédé reste bas, compte tenu de la prédominance du constituant carboné dans la matrice, c'est pourquoi ce matériau n'est pas utile dans les structures nécessitant une stabilité de forme élevée.

### Description de l'invention

L'objectif de la présente invention est de développer un procédé de fabrication qui, tout en étant simple et relativement peu long (en raison d'un cycle de densification), garantirait la fabrication d'articles en carbone-carbure de silicium possédant une rigidité et une stabilité de forme élevées, ainsi qu'étant capables de supporter des charges même après endommagement de la couche protectrice superficielle, au moins jusqu'à ce que le cycle de travail de l'article dans les conditions de fonctionnement (jusqu'à 1 500-1 600 °C) soit achevé, la sécurité étant garantie.

Le problème étudié est résolu en raison du fait que, selon le procédé revendiqué ici pour la fabrication d'articles en matériau composite carbone-carbure de silicium, qui comprend l'obtention d'une préforme à base de carbone et de matière plastique à partir de fibres de carbone et d'un liant thermodurcissable, un traitement thermique préalable de celle-ci jusqu'à ce qu'une matrice de coke renforcée par des fibres de carbone se forme, suivi de la densification de la matrice de coke et d'une siliciuration, la densification de la matrice de coke renforcée par des fibres de carbone est réalisée par infiltration de celle-ci par du carbone pyrolytique, et avant la siliciuration, le carbone pyrolytique déposé est cristallisé et des canaux poreux se forment en traitant thermiquement la préforme densifiée à une température de 1 900 à 2 000 °C et, lors de la siliciuration, un squelette de carbure de silicium se forme dans l'espace poreux de la préforme obtenue. Dans le présent texte, le terme "matière plastique" regroupe les résines organiques naturelles, modifiées ou non, et les résines organiques semi-synthétiques ou synthétiques, obtenues par polymérisation ou polycondensation.

Dans la préforme, les fibres de carbone peuvent être par exemple sous la forme de tissu ou de substrat tissé.

La charge de siliciuration est préparée sous forme d'un mélange de poudres de bore et de silicium dans le rapport suivant, en % en poids :

| | |
|---|---|
| Silicium | 85 à 95 |
| Bore | 5 à 15. |

De préférence, on prépare le mélange au moyen d'un liant organique et, avant la siliciuration, on étale le mélange uniformément, directement sur la surface de l'article, et la siliciuration est effectuée à une température de 1 800 à 2 000 °C.

Cette séquence d'opérations permet, dans un procédé relativement simple et court, d'assurer la rigidité et la stabilité du matériau et de conserver la longévité d'utilisation de celui-ci, non seulement grâce à la couche superficielle de carbure de silicium (formée dans un procédé séparé non considéré ici), mais tout d'abord grâce à la formation d'un squelette de carbure de silicium rigide dans la structure de l'article, qui pénètre dans le squelette de la base carbonée du matériau.

L'infiltration de la préforme de coke renforcée par des fibres de carbone, par du carbone pyrolytique, en combinaison avec les autres opérations, est destinée à fournir les conditions pour la formation subséquente du second squelette, celui de carbure de silicium, dans le squelette à base de carbone. A l'étape de la densification de la matrice de coke avec du carbone pyrolytique, il se crée une possibilité de formation de chemins intercommuniquants (canaux poreux) pour la pénétration du silicium dans la structure du matériau sous l'action des forces capillaires et de la diffusion, et de création du squelette de carbure de silicium avec une conversion totale du silicium en carbure de silicium. Cette possibilité est due au fait que le carbone pyrolytique, lorsqu'il remplit la préforme de coke, réduit la taille des pores ouverts, qui, dans ce cas, servent de "moule de coulée" pour obtenir le squelette. Au moment de l'infiltration des pores du matériau de l'article par le carbone pyrolytique, l'espace libre (poreux) de l'article se réduit nettement, de sorte que seule peut y pénétrer une petite quantité de silicium, suffisante pour l'interaction avec le carbone pyrolytique et la formation de la couche de carbure de silicium. Et les fibres de carbone restent en fait inchangées, c'est-à-dire que le squelette carboné est conservé avec la formation du second squelette, un squelette de carbure de silicium, qui pénètre dans le premier squelette et soutient toute la base carbonée de l'article.

La préinfiltration des pores par du carbone pyrolytique accroît la quantité totale de carbone et réduit ainsi la consommation du carbone "primaire" de base pour la formation du squelette de carbure de silicium. Grâce à cela, le matériau de l'article possède finalement tant les propriétés de son constituant carboné que celles du carbure de silicium (module d'élasticité élevé et conservation des propriétés dans des milieux oxydants), cela étant atteint avec une densité relativement faible pour un matériau ayant un squelette de carbure de silicium.

A l'étape de cristallisation du carbone pyrolytique déposé dans les pores de la matrice de coke et sur les fibres, il se produit une augmentation de la réactivité du carbone pyrolytique, nécessaire pour une formation rapide de SiC lors de la siliciuration, et donc pour prévenir l'accès du silicium aux fibres de carbone, qui ne sont pas censées se convertir en carbure de silicium.

Sinon, la réaction des fibres du carbone avec le silicium ayant pénétré conduit à la formation partielle ou totale, dans la structure de l'article, de fibres SiC fragiles, incapable de résister aux chocs et à un chargement mécanique conduisant à la rupture de la continuité du squelette carboné et, par conséquent, à la perte partielle des propriétés de résistance du matériau.

Le squelette de carbure de silicium qui se forme lorsque le silicium pénètre dans les canaux ouverts de la structure poreuse densifiée de l'article, assure une rigidité élevée du matériau de l'article, une stabilité de forme et dimensionnelle de l'article, et le maintien de la capacité de chargement mécanique de l'article lorsque le revêtement protecteur superficiel est endommagé.

### Réalisation préférée de l'invention

Pour réaliser le procédé revendiqué et obtenir des articles d'un matériau carbone-carbure de silicium, on utilise une préforme à base de carbone et de matière plastique, prête ou fraîchement préparée, ayant une densité initiale de 1,25 à 1,45 g/cm³, la teneur en charge étant de 57 à 65 % en poids, et fabriquée selon la technique du préimprégné ou en imprégnant un composant fibreux dans un moule.

On cuit la préforme obtenue dans un four, dans une atmosphère réductrice ou neutre, en chauffant de façon continue à la température de carbonisation de 900 à 1 100 °C. La carbonisation donne une préforme avec une matrice de coke renforcée par des fibres de carbone ayant une porosité de 28 à 31 % en volume et 1,0 à 1,20 g/cm³ de densité apparente. La préforme carbonisée est ensuite soumise à une densification par le carbone pyrolytique en introduisant un gaz de ville à la température de 960 à 990 °C dans l'espace de travail du four.

En général, les paramètres de densification par le carbone pyrolytique sont choisis selon la teneur en méthane dans le gaz de ville, la taille du four, et la quantité de charge, ainsi que le degré requis d'infiltration de la préforme par le carbone pyrolytique.

La préforme est densifiée jusqu'à ce que le gain pondéral en carbone pyrolytique soit de 10 à 25 %. Le carbone pyrolytique déposé dans l'espace poreux de la préforme carbonisée est constitué d'empilements de couches graphitiques disposés le long des périmètres des pores, dans la matrice de coke du matériau, et dans l'espace entre les fils de la base fibreuse.

Ensuite, la préforme densifiée par le carbone pyrolytique est soumise à un traitement thermique à une température de 1 900 à 2 000 °C sous vide ou dans une atmosphère de gaz inerte pour cristalliser le carbone pyrolytique et former des canaux poreux. Au cours du processus de cristallisation, les empilements de couches graphitiques se développent (le diamètre et la hauteur augmentent), les couches s'arrangeant parallèlement les unes aux autres à un certain espacement des plans (d₀₀₂ 3,44 à 3,47 Å). En outre, des pores de transport (ouverts) apparaissent à cause du relâchement des contraintes internes dans la matrice de coke. En conséquence, la densité apparente de la préforme devient 1,24 à 1,48 g/cm³ (selon la densité de la charge de départ).

A l'étape finale, la préforme est soumise à une siliciuration. A cet effet, on prépare un mélange de poudres de silicium et de bore (particules jusqu'à 2 mm), prises dans le rapport, en % en poids :

| | |
|---|---|
| Silicium | 85 à 95 |
| Bore | 5 à 15. |

On ajoute un liant organique liquide au mélange obtenu, dans la quantité de 8 à 12 % en poids et, avant la siliciuration, le mélange est uniformément appliqué sur la surface de la préforme dans la quantité de 60 à 200 % en poids de la préforme. La quantité du mélange pour chaque préforme particulière est définie en fonction des données sur la densité apparente de la préforme après le traitement thermique.

La siliciuration est réalisée sous vide ou dans une atmosphère de gaz inerte, tout en chauffant à la température de 1 800 à 2 000 °C, avec une exposition à la température finale pendant 0,5 à 1,5 heure. Ici, le mélange appliqué sur la surface de la préforme fond et pénètre (comme masse fondue ou vapeurs) dans les pores ouverts de la préforme. Pendant le passage de la masse fondue et des vapeurs, l'interaction du carbone de la matrice avec le silicium et le bore se produit, aboutissant à des veines de carbure de silicium qui constituent le squelette dans l'espace poreux de la préforme. Les premières couches de carbure de silicium se formant dans les pores à partir du carbone pyrolytique déposé empêchent le silicium et le bore arrivant de pénétrer jusqu'au squelette fibreux interne de la préforme.

En conséquence, le squelette de carbure de silicium paraît être "entrelacé" entre les mèches des fibres du squelette carboné de l'article.

Le déroulement du procédé à une température en dessous de 1 800 °C n'assure pas la conversion totale du silicium entré dans les pores en carbure, à cause de la faible vitesse de la réaction et de l'abaissement de la capacité de pénétration de la masse fondue, tandis qu'à une température supérieure à 2 000 °C, une réaction concurrente se produit, qui décompose le carbure en silicium et en carbone. Et le carbone produit à l'état de graphite parfait forme des zones à propriétés de résistance réduites.

Le traitement de l'article à la température de siliciuration finale favorise l'achèvement des processus de siliciuration et de diffusion, et l'élimination du silicium n'ayant pas réagi. La densité de l'article dans ce cas s'élève à 1,65 à 2,2 g/cm³.

L'addition de bore, à cause de la formation d'oxydes et de carbure de celui-ci, accroît la résistance à l'oxydation du matériau et a une influence positive sur ses propriétés mécaniques. Une teneur en bore dans le mélange supérieure à 15 %, compte tenu de la formation de siliciures, a une influence négative sur les propriétés de résistance du matériau, tandis qu'à une teneur en dessous de 5 % il ne se forme pas de composés du bore car il se perd naturellement par évaporation et entraînement dans des laitiers.

Pour mieux comprendre la présente invention, des exemples de la réalisation spécifique du procédé et de l'obtention d'un matériau carbone-carbure de silicium sont présentés ci-après. Les articles (échantillons de matériau) obtenus selon ces exemples ont été soumis à des essais, dans lesquels la densité apparente du matériau à chaque étape de fabrication, le module d'élasticité, et la résistance ultime à la flexion ont été mesurés. En plus de cela, les échantillons ont été soumis à une charge thermique allant jusqu'à 1 300 °C dans une atmosphère oxydante (O₂), après quoi on a mesuré les changements dimensionnels et de forme des échantillons, ainsi que la résistance ultime à la flexion, pour déterminer la capacité résiduelle de chargement mécanique pour le matériau n'ayant pas de couche de SiC superficielle protectrice. La disponibilité et la conservation du squelette de carbure de silicium dans la matrice carbonée ont été évaluées en fonction de ces mesures. Toutefois, la disponibilité du squelette a d'abord été déterminée visuellement, à l'étude des microsections du matériau sur lesquelles on a observé les veines de carbure de silicium dispersées dans la matrice carbonée, entre les fibres.

**Exemple 1.** On a fabriqué un article sous la forme d'une plaque de 200x200x8 mm. On a préparé une préforme à base de carbone et de matière plastique selon la technique du préimprégné à un cycle entier. A cette fin, un tissu carboné à base de fibres de rayonne du grade TNU-4 (THY-4) a été imprégné à 50 °C avec un liant phénol-formaldéhyde (résine FN donnant un résidu de coke lors de la carbonisation de 60 % en poids) dans la quantité de 60 % en poids. Le préimprégné obtenu a été séché à 50 °C pendant 28 h, puis exposé à l'air pendant 24 h. Ensuite, l'empilement de 4 couches de tissu du préimprégné a été formé selon la forme de l'article dans un moule. Le moulage a été réalisé sous pression, avec exposition à 170 °C pendant 7 h. La préforme a ensuite été refroidie sous pression pendant 12 h, donnant une préforme à base de carbone et de matière plastique, la teneur de fibres de carbone étant de 59 % en poids et la densité apparente de 1,29 g/cm³.

Une carbonisation a été réalisée dans un milieu de remplissage de coke, en chauffant à la température de 900 °C à raison de 8 °C/h, pour obtenir une préforme ayant une densité apparente de 1,03 g/cm³, qui a ensuite été soumise à une densification par carbone pyrolytique dans un four à vide électrique au moyen d'un gaz de ville, sous la pression de 1333 Pa, d'abord à 960 °C pendant 50 h, puis à 990 °C pendant 90 h. En conséquence, on a atteint un gain global de la préforme de 15 %, dû au carbone pyrolytique se déposant dans l'espace poreux de celle-ci.

La cristallisation du carbone pyrolytique et la formation de canaux poreux ont été réalisées dans un four à vide électrique sous une pression résiduelle de 133,3 Pa, à 2 000 °C pendant 1 h. La température maximale a été atteinte en 20 h. La densité apparente après ce traitement était de 1,25 g/cm³.

La siliciuration a été réalisée dans des vapeurs de silicium. A cette fin, on a placé la préforme dans un four, des creusets contenant du silicium étant placés à côté. On a fait le vide dans le four et la température a été portée à 2 000 °C à raison de 100 °C/h en moyenne. La préforme a été maintenue à la température finale pendant 0,5 h, puis refroidie sous vide à raison de 100 °C/h jusqu'à 50 °C, après quoi on a sorti la préforme du four.

Le matériau obtenu, d'une densité apparente de 2 g/cm³, avait le rapport suivant des composants, en % en poids :

| | |
|---|---|
| Fibres de carbone | 55 |
| Carbone de la matrice | 2 |
| Carbure de silicium | 43 |

Le matériau avait un module de traction statique de 30x10² kg/mm² ; une résistance ultime à la flexion à 20 °C de 12 kg/mm².

Une valeur équivalente de 11 kg/mm² a été trouvée après passage dans un milieu oxydant pendant 1 h à 1 300 °C.

Les dimensions et la forme de l'échantillon sont restées les mêmes.

**Exemple 2.** On a fabriqué une plaque de 200x200x8 mm. On a préparé une préforme à base de carbone et de matière plastique suivant la procédure de l'exemple 1, sauf qu'il a été utilisé un tissu de grade TGN-2M (TΓH-2M) et un liant de grade LBS. On a obtenu une préforme ayant une densité apparente de 1,27 g/cm³ avec une teneur en carbone de 62 % en poids. Après la carbonisation selon les conditions de l'exemple 1, la densité apparente était de 1,0 g/cm³.

La cristallisation du carbone pyrolytique a été effectuée à 1 900 °C pendant 1,5 h. La densité apparente après cela était de 1,24 g/cm³. La charge de siliciuration a été préparée sous forme d'un mélange de poudres de silicium et de bore ayant une taille des grains non supérieure à 2 mm, dans le rapport bore:silicium de 5:95 %.

Le mélange graphité obtenu a été étalé sur la surface de la préforme dans la quantité de 150 % en poids de la préforme. La température du four a été accrue suivant les conditions de l'exemple 1, jusqu'à 1 870 °C, avec exposition à cette température pendant 1 h.

Après refroidissement et sortie du four, la densité apparente de l'article est de 1,9 g/cm³, avec le rapport suivant des composants, en % en poids :

| | |
|---|---|
| Fibres de carbone | 44 |
| Carbone de la matrice | 4,9 |
| Carbure de silicium | 51 |
| Composé boré | 0,1 |

et les propriétés suivantes du matériau :

| | |
|---|---|
| Module d'élasticité | 4 000 kg/mm² |
| Résistance ultime à la flexion à 20 °C | 14 kg/mm² |
| Même valeur, obtenue après passage dans un milieu oxydant pendant 1 h | 13 kg/mm² |

Les dimensions et la forme de l'échantillon sont restées inchangées.

**Exemple 3.** On a répété la procédure de l'exemple 1 pour obtenir un article (préparé comme dans l'exemple 1). On a préparé une préforme à base de carbone et de matière plastique suivant la même procédure, sauf qu'on a utilisé un tissu réalisé en fibres de module élevé VMN-4 (BMH-4).

La densité apparente de la préforme à base de carbone et de matière plastique est de 1,45 g/cm³ et la teneur en fibres est de 60 % en poids. Après la carbonisation de la préforme suivant la procédure de l'exemple 1, la densité apparente est de 1,2 g/cm³. Après la densification par du carbone pyrolytique, le gain pondéral est de 20 %.

Après la cristallisation du carbone pyrolytique et la formation des canaux poreux, la densité apparente est devenue 1,43 g/cm³.

Pour la siliciuration, on a préparé un mélange à partir de 85 % en poids de silicium et de 15 % en poids de bore ayant une taille des particules non supérieure à 500 µm. La charge, dans la quantité de 100 % en poids de la préforme, a été mélangée avec un liant organique du grade KMTs (KMU) dans le rapport de 1:10. La pâte obtenue a été étalée uniformément sur la surface de l'article, et la siliciuration a été réalisée à la température finale de 1 800 °C avec une exposition pendant 1,5 h.

L'article obtenu, d'une densité apparente de 1,7 g/cm³, contient la proportion suivante des composants, en % en poids :

| | |
|---|---|
| Fibres de carbone | 72 |
| Carbone de la matrice | 0,5 |
| Carbure de silicium | 25 |
| Composé boré | 2,5 |

et présente les propriétés suivantes du matériau :

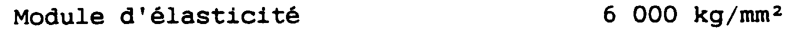

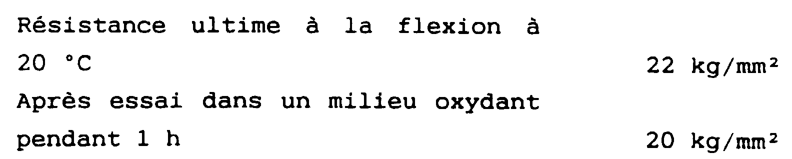

Les dimensions et la forme de l'échantillon sont restées les mêmes. En plus de cela, des essais supplémentaires ont été réalisés pour déterminer les valeurs optimales des paramètres du procédé, en particulier la température de cristallisation du carbone pyrolytique, ainsi qu'un essai pour réaliser ce procédé sans cette opération, et des essais en dehors de la température optimale de la siliciuration de la préforme. Les résultats obtenus sont présentés au tableau 1. Toutes les autres conditions reprenaient celles de l'exemple 2.

En outre, un essai de combustion (en atmosphère ouverte) de la base carbonée du matériau a été réalisé. A cet effet, un échantillon de 100x10x5 mm a été porté à 1 200 °C, avec exposition à cette température pendant 5 h.

**Tableau 1**

| N° des Ex. | Température de cristallisation du carbone pyrolytique (°C) | Température de siliciuration (°C) | Densité apparente (g/cm³) | Module d'élasticité (kg/mm²) | Résistance ultime à la flexion (kg/mm²) | |
|---|---|---|---|---|---|---|
| | | | | | Avant l'essai | Après essai dans O₂ à 1 300 °C pendant 1 h |
| 4 | 2 100 | 1 900 | 2,3 | 3 000 | 7,0 | 4,0 |
| 5 | 1 800 | 1 900 | 1,58 | 200 | 7,5 | 3,0 |
| 6 | sans cristallisation | 1 900 | 1,55 | 700 | 6,0 | 2,0 |
| 7 | 1 900 | 1 750 | 1,59 | 600 | 8,0 | 5,0 |
| 8 | 1 900 | 2 050 | 1,60 | 700 | 5,0 | 3,0 |

Après l'essai, l'échantillon avait conservé sa forme et ses dimensions, toutefois, le microrelief de surface avait une structure spongieuse (squelette de carbure de silicium).

Le matériau obtenu avait le rapport suivant des composants, en % en poids :

| | |
|---|---|
| Fibres de carbone | 9,9 |
| Carbone de la matrice | 0,1 |
| Carbure de silicium | 89 |
| Composé boré | 1,0 |

à la densité apparente de 1,5 g/cm³, un module d'élasticité de 1 800 g/mm², et une résistance ultime à la flexion de 8 kg/mm².

Les résultats obtenus suggèrent que le matériau fabriqué selon la technique décrite, grâce à la disponibilité du squelette de carbure de silicium dans celui-ci, peut fonctionner dans des conditions extrêmes, même dans le cas de l'endommagement de la couche de SiC superficielle protectrice, au moins, jusqu'à ce que le cycle de travail de la charge thermique dans un milieu oxydant soit achevé.

### Application industrielle

La présente invention revendiquée ci-après est utile dans les industries de la construction de machines, de l'aéronautique, et d'autres industries où on utilise des matériaux en carbone à des températures élevées. Le matériau peut être protégé avec une couche de SiC superficielle ou un autre revêtement réfractaire.

## Revendications

1. Procédé de fabrication d'articles en matériau composite carbone-carbure de silicium, qui comprend la préparation d'une préforme à base de carbone et de matière plastique à partir de fibres de carbone et d'un liant thermodurcissable, le traitement thermique préalable de cette préforme jusqu'à ce qu'on obtienne une matrice de coke renforcée par des fibres de carbone, suivi de la densification de la matrice de coke et d'une siliciuration, caractérisé en ce que ladite densification de la matrice de coke renforcée par des fibres de carbone est réalisée par infiltration de carbone pyrolytique, avec cristallisation du carbone pyrolytique déposé et formation de canaux poreux en effectuant le traitement thermique de la préforme densifiée à 1 900-2 000 °C avant ladite siliciuration, et en ce que dans les conditions de siliciuration il se forme un squelette de carbure de silicium par suite de l'interaction entre le silicium et le carbone.

2. Procédé selon la revendication 1, caractérisé en ce qu'on prépare la charge de siliciuration sous forme d'un mélange de poudres de bore et de silicium dans le rapport suivant, en % en poids :
| | |
|---|---|
| Silicium | 85 à 95 |
| Bore | 5 à 15. |

3. Procédé selon la revendication 2, caractérisé en ce qu'on prépare ledit mélange de poudres à l'aide d'un liant organique, en ce qu'on l'étale uniformément directement sur la surface de l'article avant la siliciuration, et en ce qu'on réalise ladite siliciuration à une température allant de 1 800 à 2 000 °C.

4. Matériau composite carbone-carbure de silicium qui comprend une base sous la forme d'un squelette de fibres de carbone disposé dans une matrice de carbone avec du carbure de silicium, caractérisé en ce que ledit carbure de silicium est compris comme second squelette pénétrant dans ledit squelette de carbone.

5. Matériau composite carbone-carbure de silicium selon la revendication 4, caractérisée en ce que lesdits composants le constituant sont compris dans le rapport suivant, en % en poids :
| | |
|---|---|
| Fibres de carbone | 30 à 72 |
| Carbone de la matrice | 0,5 à 5 |
| Carbure de silicium | 25 à 65 |
| Composé boré | 0 à 2,5 |

6. Matériau composite carbone-carbure de silicium selon la revendication 5, caractérisée en ce qu'elle comprend des fibres de carbone sous forme de tissu ou de substrat tissé.

## Patentansprüche

1. Verfahren zur Herstellung von Gegenständen aus Kohlenstoffsiliziumcarbid-Verbundwerkstoff, umfassend die Herstellung einer Vorform auf der Basis von Kohlenstoff und Kunststoff mit Hilfe von Kohlenstoffasern und einem wärmeaushärtenden Bindemittel, wobei die vorhergehende thermische Behandlung dieser Vorform dazu führt, daß man eine durch Kohlenstoffasern verstärkte Koksmatrix erhält, gefolgt von einer Verdichtung der Koksmatrize und einer Silizifikation, **dadurch gekennzeichnet**, daß die Verdichtung der durch Kohlenstoffasern verstärkten Koksmatrix durch eine Infiltration mit pyrolytischem Kohlenstoff erfolgt, mit einer Kristallisation des abgelagerten pyrolytischen Kohlenstoffes und einer Bildung von porösen Kanälen, in dem die thermische Behandlung der verdichteten Vorform bei 1 900 bis 2 000 °C vor der Silizifikation durchgeführt wird, und dadurch, daß sich unter den Bedingungen der Silizifikation ein Siliziumcarbidskelett durch eine Interaktion zwischen dem Silizium und dem Kohlenstoff bildet.

2. Verfahren nach Anspruch 1, **dadurch gekennzeichnet**, daß die Silizifizierungscharge in Form einer Mischung aus Bor- und Siliziumpulver im folgenden Verhältnis, in Gewichtsprozent, hergestellt wird:
| | |
|---|---|
| Silizium | 85 bis 95 |
| Bor | 5 bis 15. |

3. Verfahren nach Anspruch 2, **dadurch gekennzeichnet**, daß die Pulvermischung mit Hilfe eines organischen Bindemittels hergestellt wird, indem dieses gleichmäßig direkt auf die Oberfläche des Artikels vor der Silizifizierung verteilt wird, und dadurch, daß die Silizifizierung bei einer Temperatur zwischen 1 800 und 2 000 °C durchgeführt wird.

4. Kohlenstoff-Siliziumcarbid-Verbundwerkstoff, welcher eine Basis in der Form eines Skelettes aus Kohlenstoffasern umfaßt, die in einer Kohlenstoffmatrix mit Siliziumcarbid angeordnet sind, **dadurch gekennzeichnet**, daß das Siliziumcarbid wie ein zweites Skelett enthalten ist, welches in das Kohlenstoffskelett eindringt.

5. Kohlenstoff-Siliziumcarbid-Verbundwerkstoff nach Anspruch 4, **dadurch gekennzeichnet**, daß die ihn bildenden Komponenten in dem folgenden Verhältnis, in Gewichtsprozent, enthalten sind:
| | |
|---|---|
| Kohlenstoffasern | 30 bis 72 |
| Kohlenstoff der Matrix | 0,5 bis 5 |
| Siliziumcarbid | 25 bis 65 |
| Borhaltige Zusammensetzung | 0 bis 2,5 |

6. Kohlenstoff-Siliziumcarbidverbundwerkstoff nach Anspruch 5, **dadurch gekennzeichnet**, daß er Kohlenstoffasern in Form eines Gewebes oder eines gewebeartigen Substrats umfaßt.

## Claims

1. A process for producing articles of a carbon-silicon carbide composite material, which comprises preparing a carbon-plastic preform from carbon fibers and a thermosetting binder, heat pretreating thereof till a coke matrix reinforced by carbon fibers is obtained, followed by densifying the coke matrix and siliconizing, **characterized in that** said densifying of the coke matrix reinforced by carbon fibers is effected via pyrolytic carbon infiltration, with crystallization of the deposited pyrolytic carbon and the formation of pore channels via heat treating the densified preform at 190̸0̸ - 20̸0̸0̸°C being performed prior to said siliconizing, and under the siliconizing conditions a silicon carbide skeleton is formed as a result of interaction between the silicon and carbon.

2. A process according to claim 1, **characterized in that** the siliconizing charge is prepared as a mixture of boron and silicon powders taken in the following ratio, % by weight:
| | |
|---|---|
| Silicon | 85 to 95 |
| Boron | 5 to 15. |

3. A process according to claim 2, **characterized in that** said mixture of powders is prepared using an organic binder, prior to siliconizing it is uniformly spread directly over the article surface, and said siliconizing is carried out at a temperature of from 180̸0̸ to 20̸0̸0̸°C.

4. A carbon-silicon carbide composite material, which comprises a basis in the form of a skeleton of carbon fibers disposed in a carbon matrix with silicon carbide, **characterized in that** said silicon carbide is comprised as a second skeleton penetrating said carbon skeleton.

5. A carbon-silicon carbide composite material according to claim 4, **characterized in that** said components constituting thereof are comprised in the following ratio, % by weight:
| | |
|---|---|
| Carbon fibers | 30̸ to 72 |
| Matrix carbon | 0̸.5 to 5 |
| Silicon carbide | 25 to 65 |
| Boron compound | 0̸ to 2.5 |

6. A carbon-silicon carbide composite material acccording to claim 5, **characterized in that** it comprises carbon fibers as a woven fabric or a woven substrate.
